# EUROPÄISCHE PATENTSCHRIFT

(11) **EP 3 630 590 B1**
(45) Veröffentlichungstag und Bekanntmachung des Hinweises auf die Patenterteilung: **20.04.2022**
(21) Anmeldenummer: 18725802.5
(22) Anmeldetag: 15.05.2018
(51) Int. Cl.: B62J 1/22, B62J 1/26, B62J 1/00

(54) **FAHRRADSATTEL**
BICYCLE SADDLE
SELLE DE BICYCLETTE

(30) Priorität: 29.05.2017 DE 202017002940 U
(43) Veröffentlichungstag der Anmeldung: 08.04.2020
(73) Patentinhaber: Ergon International GmbH, 56070 Koblenz (DE)
(72) Erfinder: ARNOLD, Franc, 56068 Koblenz (DE); KRAUSE, Andreas, 56068 Koblenz (DE); VOLLMER, Christian, 56068 Koblenz (DE)
(74) Vertreter: dompatent von Kreisler Selting Werner - Partnerschaft von Patent- und Rechtsanwälten mbB
(86) Internationale Anmeldenummer: PCT/EP2018/062498
(87) Internationale Veröffentlichungsnummer: WO 2018/219635

(56) Entgegenhaltungen:
- EP-B1- 2 085 302
- WO-A1-02/055366
- DE-U1-202008 018 006
- DE-U1-202015 005 873
- US-A1- 2015 191 209

## Beschreibung

Die Erfindung betrifft einen Fahrradsattel.

Fahrradsättel sind über ein an einer Unterseite einer Sattelschalte angeordnetes Sattelgestell mit einer Sattelstütze verbunden. Auf der Oberseite der Sattelschale ist ein Sattelpolster zur Dämpfung angeordnet. Das Sattelpolster ist üblicherweise von einer Deckschicht oder einem Überzug bedeckt bzw. überspannt. Zur Verbesserung des Komforts von Fahrradsätteln besteht eine Vielzahl unterschiedlicher Ausgestaltungen von Fahrradsätteln. Beispielsweise sind innerhalb des Sitzpolsters Gelpads zur Verbesserung des Komforts angeordnet. Ebenso ist es bekannt, beispielsweise zwischen dem Sattelgestell und der Sattelschale insbesondere im Bereich der Sattelrückseite Dämpfungselemente vorzusehen. Die unterschiedlichsten Arten von Fahrradsätteln weisen häufig den Nachteil auf, dass der Komfort relativ gering ist und/oder die Sättel ein hohes Gewicht aufweisen.

Aus US 2015/0191209 ist ein Sattel bekannt, der auf einer Sattelschale mehrere unterschiedliche Polsterschichten aufweist. Ferner ist aus DE 20 2025 005 873 ein Fahrradsattel mit den Merkmalen des Oberbegriffs des Anspruchs 1 bekannt.

Aufgabe der Erfindung ist einen Fahrradsattel mit guten Komforteigenschaften zu schaffen.

Die Lösung der Aufgabe erfolgt erfindungsgemäß durch einen Fahrradsattel gemäß Anspruch 1.

Der Fahrradsattel weist eine Sattelschale auf. Mit einer Oberseite der Sattelschale ist ein Sitzpolster verbunden. Dies kann gegebenenfalls von einer Deckschicht überspannt sein. Ferner kann das Sitzpolster unterschiedliche Härtebereiche, z. B. unterschiedliche Dicken und/oder Ausnehmungen aufweisen. Ferner kann das Sitzpolster, insbesondere partiell aus unterschiedlichen Materialien hergestellt sein. Erfindungsgemäß weist der Fahrradsattel ferner ein Trägerelement auf. Das Trägerelement dient zur Verbindung mit einem Sattelgestell. Das Sattelgestell dient zur Verbindung mit einer Sattelstütze. Gegebenenfalls kann auch eine unmittelbare Verbindung der Sattelstütze mit dem Trägerelement erfolgen. Ferner ist es möglich, dass das Sattelgestell als Verbindungselement zwischen der Sattelstütze und dem Trägerelement ausgebildet ist bzw. als Verbindungselement dient.

Ferner ist zwischen dem vorzugsweise aus relativ steifem Kunststoff hergestellten Trägerelement und der Sattelschale ein Elastomerkörper aus Schaummaterial angeordnet. Hierdurch erfolgt eine Entkopplung der das Sitzpolster tragenden Sattelschale von dem im Wesentlichen starr mit der Sattelstütze verbundenen Trägerelement. Hierdurch ist es insbesondere möglich, dass die Sattelschale in Fahrtrichtung seitlich verkippt werden kann bzw. ein seitliches Verkippen der Sattelschale um ihre Längsachse, die in Fahrtrichtung weist, möglich ist. Dies erhöht bei Tretbewegungen den Komfort, da die Sattelschale die Beckenbewegung des Benutzers zumindest teilweise mitmacht bzw. sich synchron zum Becken bewegt. Hierdurch ist insbesondere auch eine Vergleichmäßigung der Druckverteilung während des Tretens erzielt. Insbesondere ist es auch möglich, mit Hilfe eines erfindungsgemäß aufgebauten Sattels Asymmetrie in dem Körper des Benutzers, wie beispielsweise ein kürzeres Bein oder ein Schiefstellung der Hüfte auszugleichen. Dies erfolgt automatisch aufgrund der Beweglichkeit der Sattelschale gegenüber dem Trägerelement. Hierdurch werden insbesondere bei Benutzung mit asymmetrischem Körper auftretende gegebenenfalls schmerzhafte Belastungen und Druckstellen vermieden.

Zur weiteren Verbesserung des Sitzkomforts weist die Sattelschale erfindungsgemäß eine geringere Steifigkeit, d. h. ein geringeres Elastizitätsmodul als das Trägerelement auf. Insbesondere ist es hierdurch möglich, auf einfache Weise Sättel mit unterschiedlichem Sitzkomfort herzustellen bzw. Sättel für unterschiedliches Gewicht eines Benutzers herzustellen. Dies ist auf einfache Weise dadurch möglich, dass der Unterschied der Steifigkeit zwischen der Sattelschale und dem Trägerelement verändert wird. Insbesondere ist das Trägerelement aus hartem bzw. sehr steifem Material. Die Steifigkeit der Sattelschale kann sodann zur Variierung des Komforts oder einer entsprechenden Gewichtsgruppe der Benutzer verändert werden.

Besonders bevorzugt ist es, dass das Trägerelement aus faserverstärktem Kunststoff hergestellt ist bzw. faserverstärkten Kunststoff aufweist. Besonders bevorzugt ist es hierbei, glasfaserverstärkten und/oder carbonfaserverstärkten Kunststoff zu verwenden. Durch einen entsprechend ggf. hohen Anteil an Fasern kann ein sehr steifes Trägerelement hergestellt werden. Des Weiteren ist es zur Verstärkung des Trägerelements möglich, zusätzlich oder anstelle der Verwendung von faserverstärkten Kunststoffen das Trägerelement durch Versteifungselemente aus anderen härteren Materialien oder auch durch Versteifungsrippen, die insbesondere aus demselben Material hergestellt sind, steifer als die Sattelschale auszugestalten. Die Versteifungsrippen, die sich vorzugsweise im Wesentlichen in Linksrichtung des Fahrradsattels erstrecken, sind insbesondere an einer Unterseite des Trägerelements angeordnet. Eine besonders bevorzugte Ausgestaltung von Versteifungsrippen ist in EP 2 628 668 und EP 14 184 105.6 beschrieben.

Insbesondere weist das Trägerelement einen Faseranteil von mindestens 10 - 30 %.

Des Weiteren ist es bevorzugt, dass das Elastizitätsmodul des Trägerelements mindestens doppelt so hoch ist wie das Elastizitätsmodul der Sattelschale. Besonders bevorzugt ist es, dass das Elastizitätsmodul fünfmal, insbesondere zehnmal so hoch ist.

Des Weiteren ist es bevorzugt, dass das Elastizitätsmodul des Trägerelements mindestens 3000 MPa, insbesondere mindestens 4000 MPa und besonders bevorzugt mindestens 6000 MPa beträgt.

Des Weiteren kann auch die Sattelschale faserverstärkt sein, wobei die Verwendung von Glasfasern und/oder Carbonfasern besonders bevorzugt ist. Bei einer Faserverstärkung der Sattelschale weist diese einen Faseranteil von vorzugsweise weniger als 30 %, insbesondere weniger als 25 % und besonders bevorzugt weniger als 20 % auf. Gegebenenfalls kann die Sattelschale auch keine Fasern aufweisen.

Das Elastizitätsmodul der Sattelschale ist in besonders bevorzugter Ausführungsform kleiner als 3000 MPa, insbesondere kleiner als 2000 MPa und besonders bevorzugt kleiner als 1000 MPa.

Vorzugsweise erfolgt bei dem erfindungsgemäßen Fahrradsattel ferner mit Hilfe des Sitzpolsters ein Einstellen des Sitzkomforts. Dies kann insbesondere durch Wahl des Polstermaterials und/oder der geometrischen Ausgestaltung des Polsters erfolgen. So können unterschiedliche Bereiche aus vorzugsweise unterschiedlichem Material hergestellt sein. Auch kann das Material beispielsweise an unterschiedlichen Bereichen unterschiedlich verdichtet sein, so dass unterschiedliche Polsterzonen realisiert sind. Auch können Ausnehmungen und dergleichen im Sattelpolster zur Verbesserung des Sitzkomforts angeordnet sein. Zusätzlich erfolgen durch das Vorsehen des elastomeren Körpers zwischen der Sattelschale und dem Trägerelement eine Dämpfung sowie das Ermöglichen einer Kippbewegung der Sattelschale um die Längsachse.

Der Elastomerkörper ist elastisch verformbar, so dass eine Relativbewegung zwischen dem Trägerelement und der Sattelschale ermöglicht ist. Hierbei ist es insbesondere möglich, zur Ausgestaltung von Sätteln mit unterschiedlichen Komforteigenschaften Elastomerkörper aus unterschiedlichem Material vorzusehen. Bevorzugt werden thermoplastische Elastomere (TPE) eingesetzt. Bevorzugt ist die Verwendung von Schäumen, wie PU-Schäumen. Insbesondere sind geschlossenporige Schäume bevorzugt. Der Elastomerkörper weist insbesondere TPU (thermoplastisches Polyurethan) auf und ist besonders bevorzugt aus diesem Material hergestellt, wobei insbesondere E-TPU bevorzugt ist. Besonders geeignet ist hierfür das von der Firma BASF unter dem Produktnamen "Infinergy" hergestellte Material. Verfahren zur Herstellung von TPU sind beispielsweise in EP 692 510, WO 00/44821, EP 11 74 459 und EP 11 74 458 beschrieben. Ferner ist es bevorzugt, dass der Elastomerkörper aus EVA (Ethylenvinylacetat) hergestellt ist, bzw. EVA aufweist. Ferner können als Materialien EPP (expandiertes Polypropylen) und EPE (expandiertes Polyethylen) verwendet werden. Auch eine Kombination dieser Materialien miteinander oder eine Kombination der Materialien mit anderen Materialien ist möglich, zum Beispiel in einem Mehrschichtaufbau. Insbesondere können auch Mischungen mit Co- oder Terpolymeren eingesetzt werden. Hierdurch können unterschiedliche Dämpfungs- und Bewegungseigenschaften des Elastomer-körpers erzielt werden. Auch ist es möglich, die entsprechenden Materialien in unterschiedlichen Bereichen stärker zu verdichten, so dass hierdurch die Dämpfungs- und Bewegungseigenschaften beeinflusst werden können.

Des Weiteren ist als Material für den Elastomerkörper ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist der Elastomerkörper erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des Elastomerkörpers geeigneten Materialien.

Ein weiteres gut geeignetes Material zur Ausbildung des Elastomerkörpers ist ein Polyester-basiertes PU-Material. Besonders geeignet ist hierbei das von der Firma BASF unter dem Markennamen "Elastopan" angebotene Material. Vorzugsweise weist der Elastomerkörper ein derartiges Material auf oder ist aus diesem hergestellt, wobei es wiederum möglich ist, dieses Material mit anderen beschriebenen Materialien zu kombinieren.

Besonders bevorzugt ist es, dass der Elastomerkörper einen oder mehrere Partikelschäume aufweist und insbesondere aus einem oder mehreren Partikelschäumen hergestellt ist. Als Grundmaterial sind hierbei E-TPU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine geringe Dichte, eine gute Wärme-/Kälteisolation und gute Dämpfungseigenschaften aufweisen.

Der Elastomerkörper weist insbesondere in einem Sitzbereich des Sattels ein Elastizitätsmodul von 0,1 bis 10 MPa, insbesondere 0,1 bis 5 MPa und besonders bevorzugt 0,1 bis 1,0 MPa auf. Das besonders bevorzugte Material Infinergy E-TPU weist ein Elastizitätsmodul von 0,1 bis 0,5 MPa auf. Geeignetes Material ist insbesondere auch TPE (E-Modul: 1,0 bis 2,0 MPa).

Des Weiteren ist es besonders bevorzugt, dass der Elastomerkörper aufgrund seiner geringen Dichte ein geringes Gewicht aufweist. Insbesondere weist der Elastomerkörper eine Dichte von weniger als 1 g/cm³, besonders bevorzugt weniger als 0,5 g/cm³, und insbesondere weniger als 0,2 g/cm³ auf. Eines der besonders bevorzugten Materialien, das Material Elastil, weist eine Dichte im Bereich von 0,05 bis 0,2 g/cm³ auf.

Das Reboundverhalten des Elastomerkörpers liegt vorzugsweise im Bereich von vorzugsweise mehr als 30%, insbesondere mehr als 40% und besonders bevorzugt mehr als 50% auf.

Besonderes bevorzugt ist es, dass Trägerelement und Sattelschale ausschließlich über den Elastomerkörper miteinander verbunden sind, um eine gute Entkopplung von Trägerelement und Sattelschale zu realisieren. Eine gegebenenfalls zusätzlich vorgesehene Verbindung ist hierbei vorzugsweise derart gewählt, dass hierdurch die Entkopplungs- und Dämpfungseigenschaften nicht oder nur geringfügig beeinträchtigt werden. Sofern eine Verbindung zwischen Sattelschale und Trägerelement vorgesehen sein sollte, ist es ferner bevorzugt, diese im Bereich einer Sattelspitze vorzusehen, so dass die Entkopplung im Bereich einer Sattelrückseite bzw. eines Sitzbereichs des Sattels weiterhin gewährleistet ist. Insbesondere in diesem Bereich ist die Entkopplung erfindungsgemäß vorteilhaft, da hierdurch ein Verkippen des Sattels insbesondere in diesem Bereich um seine Längsachse zum Ausgleich von Beckenbewegungen möglich ist.

Das Trägerelement und/oder die Sattelschale sind vorzugsweise aus steiferem Material hergestellt als der Elastomerkörper. Zur Herstellung des Trägerelements und der Sattelschale wird Kunststoff verwendet. Das Trägerelement und das Sattelelement weisen vorzugsweise PP, PA6 oder PA12 auf oder sind aus diesen Materialien hergestellt. Da das Trägerelement steifer als die Sattelschale ausgebildet ist, ist die Verwendung von PP (E-Modul: 1100 bis 1450 MPa) bevorzugt. Ein weiteres bevorzugtes Material aus dem das Trägerelement hergestellt sein kann oder das das Trägerelement aufweist, ist glasfaserverstärktes TPU mit einem Faseranteil von 10 - 30 % und einem Elastizitätsmodul zwischen 1000 und 6500 MPa.

Erfindungsgemäß weisen das Trägerelement und die Sattelschale dasselbe Basismaterial, beispielsweise PP, PA6 oder PA12, auf, wobei die unterschiedliche Steifigkeit, sodann durch unterschiedliche Faseranteile erzielt bzw. bewirkt wird.

Die Verbindung des Sattelgestells mit dem Trägerelement erfolgt in bevorzugter Ausführungsform derart, dass das Sattelgestell, insbesondere ein vorderes Verbindungselement des Sattelgestells mit der Sattelspitze, das heißt einem in Fahrtrichtung nach vorne weisenden Bereich des Sattels verbunden ist. Des Weiteren ist es bevorzugt, dass das Sattelgestell insbesondere ein hinteres Verbindungselement des Sattelgestells mit einer Sattelrückseite, das heißt einer entgegen der Fahrtrichtung weisenden Rückseite des Trägerelements verbunden ist. Das Sattelgestell weist des Weiteren vorzugsweise zwei Streben auf. Diese können im vorderen Bereich gemeinsam mit dem Trägerelement verbunden sein. Gegebenenfalls sind die beiden Sattelstreben im vorderen Bereich auch vor dem Verbinden mit dem Trägerelement zusammengeführt. Die Verbindung im Bereich der Sattel rückseite erfolgt bei zwei Streben vorzugsweise getrennt. In diesem Fall weist das hintere Verbindungselement zwei gesonderte Verbindungsteile auf.

Die Verbindung des Sattelgestells mit dem Trägerelement im Bereich der Vorderseite und der Rückseite des Sattels verbessert den Komfort, da zwischen den beiden Verbindungsbereichen eine elastische Verformung des Sattels möglich ist. Wenngleich diese aufgrund der höheren Steifigkeit des Trägerelements geringer ist als die Verformungsmöglichkeit des Elastomerkörpers ist es bevorzugt, dass das Trägerelement aus einem Material hergestellt ist, das bei herkömmlicher Belastung während des Fahrradfahrens eine elastische Verformung ermöglicht, so dass der Komfort weiter verbessert ist.

Vorzugsweise erstreckt sich das Trägerelement von dem Bereich der Sattelspitze bis zu dem Bereich der Sattelrückseite und stellt insbesondere eine Verbindung zwischen dem vorderen und dem hinteren Aufnahmeelement des Sattelgestells dar. Gegebenenfalls kann das Sattelgestell im Bereich der Sattelspitze auch mit der Sattelschale verbunden sein. Dies ist insbesondere dann gegeben, wenn im Bereich der Sattelstütze kein Trägerelement vorgesehen ist. Das in Fahrtrichtung vordere Ende des Trägerelements kann sodann beispielsweise mit der Sattelschale oder über ein Zwischenelement mit dem Sattelgestell verbunden sein.

Besonders bevorzugt ist es, dass das Trägerelement einstückig ausgebildet ist. Ferner ist es bevorzugt, dass sich das Trägerelement in Längsrichtung über die gesamte Länge des Sattels erstreckt und insbesondere sowohl an der Sattelrückseite als auch an der Sattelspitze mit dem Sattelgestell verbunden ist. Insbesondere kann das Trägerelement ähnlich einer Sattelschale Bereiche mit unterschiedlicher Elastizität aufweisen. Dies kann durch die Verwendung unterschiedlicher Materialien und/oder unterschiedlicher Materialdicken erzielt werden. Hierdurch kann insbesondere die Elastizität bzw. Nachgiebigkeit des Trägerelements dem gewünschten Komfort angepasst werden. Insbesondere ein Durchbiegen des Trägerelements um eine Achse quer zur Längsrichtung des Sattels kann hierdurch variiert werden.

In einer besonders bevorzugten Ausführungsform der Erfindung erstreckt sich der Elastomerkörper über einen Sitzbereich des Fahrradsattels vollständig. Der Sitzbereich des Fahrradsattels ist hierbei der verbreiterte Bereich des Sattels in dem die Sitzknochen des Benutzers angeordnet sind. Des Weiteren ist es bevorzugt, dass sich der Elastomerkörper über eine Sattelspitze des Fahrradsattels und/oder über einen Mittelbereich des Fahrradsattels vollständig erstreckt. Besonders bevorzugt ist eine Kombination dieser Ausführungsformen, also dass sich der Elastomerkörper sowohl über den Sitzbereich, die Sattelspitze als auch den Mittelbereich erstreckt. Hierbei ist es bevorzugt, dass der Elastomerkörper einstückig ausgebildet ist.

Im Sitzbereich ist es bevorzugt, dass der Elastomerkörper einen Großteil einer Unterseite der Sattelschale, insbesondere die gesamte Unterseite der Sattelschale bedeckt. Zumindest bedeckt der Elastomerkörper mindestens 70%, vorzugsweise mindestens 80% und besonders bevorzugt mindestens 90% der Unterseite der Sattelschale. Des Weiteren ist es bevorzugt, dass der Elatomerkörper im Bereich der Sattelspitze, d.h. im vorderen Bereich des Fahrradsattels die Unterseite der Sattelschale zu einem wesentlichen Teil, insbesondere vollständig bedeckt. Insbesondere bedeckt der Elastomerkörper im Bereich der Sattelspitze die Unterseite der Sattelschale um mindestens 70%, vorzugsweise mindestens 80% und besonders bevorzugt mindestens 90%. Entsprechend ist es bevorzugt, dass der Elastomerkörper auch im Mittelbereich, d.h. dem Bereich des Fahrradsattels zwischen dem Sitzbereich und der Sattelspitze vorgesehen ist. Hierbei ist es wiederum bevorzugt, dass der Elastomerkörper im Mittelbereich die Unterseite der Sattelschale im Wesentlichen insbesondere vollständig bedeckt. Bevorzugt ist ein Bedecken der Unterseite der Sattelschale im Mittelbereich um insbesondere mindestens 70%, bevorzugt mindestens 80% und besonders bevorzugt mindestens 90% vorgesehen.

In einer weiteren besonders bevorzugten Ausführungsform entspricht die Außenkontur des Elastomerkörpers im Wesentlichen der Außenkontur des Fahrradsattels, insbesondere der Sattelschale. Gegebenenfalls sind die Abmessungen des Elasomerkörpers etwas kleiner als die Außenabmessungen des Fahrradsattels bzw. der Sattelschale. Beispielsweise ist die Außenkontur des Fahrradsattels umlaufend 2 bis 3 mm breiter als die Außenkontur des Elastomerkörpers.

Bei einer weiteren bevorzugten Ausführungsform erstreckt sich die Sattelschale über einen Sitzbereich des Fahrradsattels vollständig. Hierdurch kann insbesondere die von den Sitzknochen auf den Sattel übertragene Kraft gut aufgenommen werden. Bevorzugt ist es eine derartige Sattelschale mit einem sich ebenfalls vollständig über den gesamten Sitzbereich erstreckenden Elastomerkörper zu verbinden.

Der Elastomerkörper überdeckt hierbei vorzugsweise den gesamten Fahrradsattel. Je nach verwendetem Material ist es bevorzugt, dass der Elastomerkörper eine Dicke von 5 bis 15 mm, insbesondere 5 bis 10 mm aufweist. Es ist besonders bevorzugt, dass insbesondere der Elastomerkörper und besonders bevorzugt dessen Dicke und Material derart gewählt ist, dass seitliche Randbereiche des Sitzbereichs um bis zu 5mm durch die Belastung des Benutzers nach unten bewegt werden können.

Des Weiteren ist es bevorzugt, dass sich die Sattelschale über die Sattelspitze und/oder den Mittelbereich des Sattels, insbesondere vollständig erstreckt. Bei entsprechender Ausgestaltung des Elasomerkörpers ist es hierbei wiederum bevorzugt, dass die Außenkontur der Sattelschale derjenigen des Elastomerkörpers entspricht. Insbesondere ist die Sattelschale einstückig ausgebildet und erstreckt sich in besonders bevorzugter Ausführungsform über den Sitzbereich, den Mittelbereich und den Bereich der Sattelspitze. Hierbei ist es wiederum bevorzugt, dass der Elastomerkörper ebenfalls einstückig ausgebildet ist und sich über diese drei Bereiche des Sattels erstreckt. Eine Außenkontur der Sattelschale entspricht in besonders bevorzugter Ausführungsform der Außenkontur des Elastomerkörpers.

Die Sattelschale, die in bevorzugter Ausführungsform aus härterem bzw. steiferen Material als der Elastomerkörper hergestellt ist, kann ähnlich dem Trägerelement Bereiche aufweisen, die aus unterschiedlichem Material hergestellt sind und/oder eine unterschiedliche Dicke aufweisen. Beispielsweise ist es wie auch bei dem Trägerelement möglich, Stege, Verdickungen und dergleichen vorzusehen. Hierdurch können die Elastizitätseigenschaften in unterschiedlichen Bereichen variiert werden und somit der Komfort des Fahrradsattels je nach der Anforderung, für die das entsprechende Sattelmodell hergestellt wurde, variiert werden.

In besonders bevorzugter Ausführungsform des erfindungsgemäßen Fahrradsattels ist das Trägerelement im Sitzbereich angeordnet und insbesondere der Sattelschale gegenüberliegend vorgesehen.

Die Größe des Trägerelements im Sitzbereich beträgt mindestens 70%, insbesondere mindestens 80% und besonders bevorzugt mindestens 90% der Größe der Sattelschale im Sitzbereich. Bei der Größe handelt es sich hierbei insbesondere um die im montierten Zustand des Sattels auf eine Horizontalebene projizierte Fläche.

Vorzugsweise ist das Trägerelement auch im Bereich der Sattelspitze, insbesondere Sattelschale gegenüberliegend angeordnet. Die Größe des Trägerelements in diesem Bereich entspricht vorzugsweise wiederum mindestens 70%, insbesondere mindestens 80% und besonders bevorzugt mindestens 90% der Größe der Sattelschale im Bereich der Sattelspitze.

Des Weiteren ist es besonders bevorzugt, dass das Trägerelement insbesondere zusätzlich auch im Mittelbereich des Sattels, d.h. im Bereich zwischen der Sattelspitze und dem Sitzbereich angeordnet ist. Die Größe des Trägerelements beträgt vorzugsweise mindestens wiederum 70%, insbesondere mindestens 80% und besonders bevorzugt mindestens 90% der Größe der Sattelschale in diesem Bereich.

Besonders bevorzugt ist es, dass das Trägerelement schalenförmig ausgebildet ist. Insbesondere weist das Trägerelement einen Sitzbereich, einen Mittelbereich und einen Bereich einer Sattelspitze auf, wobei diese drei Bereiche vorzugsweise einstückig sind, so dass ein einziges gemeinsames Trägerelement vorgesehen ist. Die Größe des Trägerelements beträgt vorzugsweise mindestens 70%, insbesondere mindestens 80% und besonders bevorzugt mindestens 90% der Größe der gesamten Sattelschale. Die vorstehenden Größenangaben verstehen sich immer in der entsprechend projizierten Fläche.

In bevorzugter Ausführungsform weist das Trägerelement ein von der Sattelschale wegweisendes, bzw. in montiertem Zustand nach unten weisendes Träger-Randelement auf. Das Randelement ist vorzugsweise im Sitzbereich und/oder im Mittelbereich und/oder im Bereich der Sattelspitze und/oder im Bereich der Rückseite des Sattels angeordnet. Bevorzugt ist es, dass bezogen auf die Längsachse des Fahrradsattels das Träger-Randelement symmetrisch, d.h. einander gegenüberliegend angeordnet ist. In einer besonders bevorzugten Ausführungsform ist das Randelement umlaufend, d.h. insbesondere ohne Unterbrechungen ausgebildet. Die Höhe des Randelements kann in sämtlichen unterschiedlichen Ausführungsformen variieren. Insbesondere weist das Randelement eine Höhe von 3 bis 5 mm auf. Gegebenenfalls kann das Randelement in unterschiedlichen Bereichen auch unterschiedliche Höhen aufweisen. Hierdurch kann beispielsweise die Steifigkeit des Trägerelements auf einfache Weise beeinflusst werden.

Der Elastomerkörper, der zwischen der Sattelschale und dem Trägerelement angeordnet ist, ist vorzugsweise mit beiden Elementen fest verbunden. Der Elastomerkörper bedeckt mindestens 70%, insbesondere mindestens 80% und insbesondere mindestens 90% und besonders bevorzugt mindestens 100% der Unterseite der Sattelschale. Bevorzugt ist es ferner, dass der Elastomerkörper mindestens 70%, insbesondere mindestens 80% und insbesondere mindestens 90% und besonders bevorzugt mindestens 100% einer Oberseite des Trägerelements bedeckt. Hierdurch sind eine gute Verbindung zwischen der Sattelschale und dem Trägerelement hergestellt und gute Dämpfungseigenschaften realisiert.

Bei einer weiteren besonders bevorzugten Ausführungsform ist der Elastomerkörper zumindest teilweise in Seitenansicht des Fahrradsattels sichtbar. Dies ist insbesondere je nach Ausgestaltung der Randelemente auf einfache Weise möglich. Dies hat den Effekt, dass die Dämpfungscharakteristik des Sattels unmittelbar für den Benutzer sichtbar ist. Auch die doppelschalige Ausgestaltung des Sattels durch Vorsehen einer Sattelschale und eines gegenüberliegenden Trägerelements ist hierdurch gut sichtbar.

Des Weiteren ist es bevorzugt, dass der erfindungsgemäße Fahrradsattel derart ausgestaltet ist, dass die Sattelschale gegenüber dem Trägerelement bei Belastung, d.h. bei Benutzung um eine sich in Fahrtrichtung erstreckende Längsachse des Sattels schwenkbar ist. Insbesondere ist ein Schwenken der Sattelschale gegenüber dem Trägerelement um 2° bis 10° und besonders bevorzugt um 2° bis 5° gewährleistet.

In besonders bevorzugter Weiterbildung der Erfindung ist der Elastomerkörper flächig mit einer Unterseite der Sattelschale verbunden. Bevorzugt ist es ferner, dass ebenfalls eine flächige Verbindung mit dem Trägerelement besteht. Bei einer bevorzugten Weiterbildung der Erfindung ist die Sattelschale nicht eben ausgestaltet, sondern weist gekrümmte Bereiche auf. Insbesondere an der Außenseite des Sattels ist es bevorzugt, dass die Sattelschale einen nach unten weisenden Rand aufweist. Hierdurch ist die seitliche Steifigkeit des Sattels verbessert. Bei einer derartigen Sattelschale entsteht unter der Sattelschale insbesondere im Sitzbereich ein Raum. Der Elastomerkörper ist in bevorzugter Ausführungsform zumindest teilweise in diesem Raum angeordnet.

Ferner wird ein nicht beanspruchtes Verfahren zur Herstellung eines Fahrradsattels, insbesondere eines Fahrradsattels wie vorstehend beschrieben, offenbart. Die Herstellung erfolgt derart, dass die Sattelschale und das Trägerelement in eine Form, insbesondere eine Spritzform eingelegt werden. Das Einlegen erfolgt derart, dass zwischen der Sattelschale und dem Trägerelement ein Abstand angeordnet ist, wobei die beiden Elemente einander gegenüberliegend angeordnet sind, so dass eine Oberseite des Trägerelements der Unterseite der Sattelschale gegenüberliegt. Bevorzugt ist es selbstverständlich, dass die Bauteile zu einer Längsachse des Sattels symmetrisch ausgebildet und entsprechend symmetrisch angeordnet sind. Erfindungsgemäß erfolgt sodann ein Einbringen bzw. Einspritzen des Materials des Elastomerkörpers zwischen die Sattelschale und das Trägerelement. Hierfür erfolgt vorzugsweise unmittelbar ein Verbinden des Materials des Elastomerkörpers mit der Unterseite der Sattelschale bzw. der Oberseite des Trägerelements.

Anschließend oder gegebenenfalls im selben Herstellungsschritt kann auch das Sattelpolster aufgebracht bzw. aufgespritzt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Fahrradsattels,
- Fig. 2: eine schematische Seitenansicht des in Fig. 1 dargestellten Fahrradsattels,
- Fig. 3: eine schematische Schnittansicht entlang der Linie III-III in Fig. 1, und
- Fig. 4: eine schematische Schnittansicht entlang der Linie IV-IV in Fig. 1.

Ein Fahrradsattel weist in Draufsicht einen Sitzbereich 10 auf, an den sich ein Mittelbereich 12 anschließt. Der Mittelbereich 12 geht in die Sattelspitze 14 über. Hierbei ist die Sattelspitze 14 schmal ausgebildet und der Sitzbereich 12 breit ausgebildet, so dass im Sitzbereich der größte Teil des Gewichts des Fahrers insbesondere über die Sitzknochen aufgenommen wird. Der Fahrradsattel ist zu einer Mittelachse 16, die in Längsrichtung verläuft, symmetrisch ausgebildet.

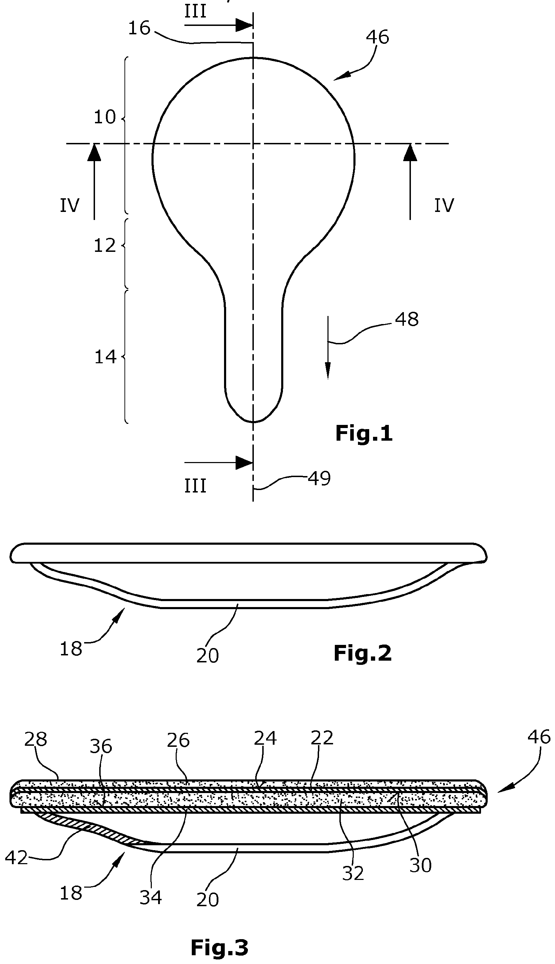

Eine Unterseite des Fahrradsattels ist mit einem Sattelgestell 18 (Fig. 2) verbunden. Die dargestellte Ausführungsform des Sattelgestells 18 weist insbesondere zwei sich im Wesentlichen in Linksrichtung des Sattels erstreckende Streben auf. In einem mittleren Bereich 20 der beiden Streben des Sattelgestells 18 ist dieses über ein Befestigungselement mit der Sattelstütze verbindbar.

Der erfindungsgemäße Fahrradsattel weist eine Sattelschale 22 (Fig. 3) auf. An einer Oberseite 24 der Sattelschale 22 ist ein Sattelpolster 26 angeordnet. Dieses kann wie im dargestellten Ausführungsbeispiel von einer Deckschicht 28 überspannt sein.

An einer Unterseite 30 der Sattelschale 22 ist ein Elastomerkörper 32 an geordnet. Im dargestellten Ausführungsbeispiel erstreckt sich der Elastomerkörper 32 über die gesamte Unterseite 30 der Sattelschale 32 und ist insbesondere flächig mit dieser verbunden.

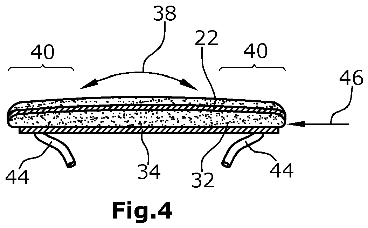

Der Sattelschale 22 gegenüberliegend ist ein Trägerelement 34 vorgesehen. Erfindungsgemäß weist das Trägerelement eine höhere Steifigkeit als die Sattelschale auf. Die Steifigkeit ist vorzugsweise durch unterschiedliche Mengen an Fasern in dem Kunststoffmaterial der Sattelschale bzw. im Kunststoffmaterial des Trägerelements realisiert. Der Elastomerkörper 32 ist somit zwischen der Sattelschale 22 und dem Trägerelement 34 angeordnet. Die Verbindung zwischen einer Oberseite 36 des Trägerelements 34 und dem Elastomerkörper 32 erfolgt vorzugsweise wiederum über die gesamte Oberfläche 36. Da die Sattelschale 22 vorzugsweise nicht oder vorzugsweise nur im Bereich der Sattelspitze 14 mit dem Trägerelement 34 verbunden ist, ist die Sattelschale 22 von dem Trägerelement 34 entkoppelt. Hierdurch ist es in besonders bevorzugter Ausführungsform möglich, dass die Sattelschale 22 insbesondere im Sitzbereich 10, wie durch den Pfeil 38 (Fig. 4) angedeutet, verkippt werden kann. In äußeren Bereichen 40 des Sitzbereichs kann bei entsprechender Belastung die Sattelschale somit um beispielsweise bis zu 5 mm nachgeben. Hierdurch ist die Kippbewegung des Beckens während des Fahrradfahrens teilweise ausgeglichen bzw. der Sattel macht die Kippbewegung des Beckens mit.

Das Sattelgestell 18 ist über ein vorderes Verbindungselement 42 mit dem Trägerelement 34 im Bereich der Sattelspitze 14 verbunden. Ferner ist das Sattelgestell 18 über zwei hintere Verbindungsteile 44 mit einer Sattelrückseite 46, die sich insbesondere entgegen einer Fahrtrichtung 48 (Fig. 1) an den Sitzbereich anschließt.

Bei der in Figur 4 dargestellten Ausführungsform ist die Sattelschale 22 gegenüber dem Trägerelement 34 auch im äußeren Randbereich 40 in einem Abstand zueinander angeordnet. Hierdurch ist der Elastomerkörper 32 in einer Seitenansicht (Pfeil 46) für den Benutzer sichtbar.

## Patentansprüche

1. Fahrradsattel mit
einer Sattelschale (22),
einem mit einer Oberseite (24) der Sattelschale (22) verbundenen Sattelpolster (26),
einem Trägerelement (34), das mit einem Sattelgestell (18) zur Verbindung mit einer Sattelstütze verbunden ist und
einem zwischen dem Trägerelement (34) und der Sattelschale (22) angeordneten Elastomerkörper (32),
wobei das Trägerelement (34) und die Sattelschale (22) aus Kunststoff und der Elastomerkörper (32) aus Schaummaterial hergestellt ist,
wobei die Sattelschale (22) eine geringere Steifigkeit als das Trägerelement (34) aufweist.
**dadurch gekennzeichnet, dass**
das Trägerelement (34) und die Sattelschale (22) dasselbe Basismaterial aufweisen, wobei die unterschiedliche Steifigkeit durch unterschiedliche Faseranteile erzielt ist.

2. Fahrradsattel nach Anspruch 1, **dadurch gekennzeichnet, dass** das Trägerelement (24) faserverstärkten Kunststoff, insbesondere glasfaserverstärkten und/oder carbonfaserverstärkten Kunststoff, aufweist, wobei es bevorzugt ist, dass das Trägerelement (24) mindestens 10 %, insbesondere mindestens 20 % und besonders bevorzugt mindestens 30 % Fasern aufweist.

3. Fahrradsattel nach Anspruch 1 oder 2, **dadurch gekennzeichnet, dass** das Elastizitätsmodul des Trägerelements (34) mindestens doppelt, insbesondere fünfmal, besonders bevorzugt zehnmal so hoch ist wie das Elastizitätsmodul der Sattelschale (22).

4. Fahrradsattel nach einem der Ansprüche 1 - 3, **dadurch gekennzeichnet, dass** das Elastizitätsmodul des Trägerelements (34) mindestens 3000 MPa, insbesondere mindestens 4000 MPa und besonders bevorzugt mindestens 6000 MPa beträgt und/oder dass das Elastizitätsmodul der Sattelschale (22) kleiner als 3000 MPa, insbesondere kleiner als 2000 MPa und besonders bevorzugt kleiner als 1000 MPa ist.

5. Fahrradsattel nach einem der Ansprüche 1 - 4, **dadurch gekennzeichnet, dass** die Sattelschale (22) weniger als 30 %, vorzugsweise weniger als 25 %, besonders bevorzugt weniger als 20 % Fasern aufweist, und insbesondere keine Fasern aufweist.

6. Fahrradsattel nach einem der Ansprüche 1 - 5, **dadurch gekennzeichnet, dass** das Trägerelement (34) und die Sattelschale (22) PP, PA6 oder PA12 aufweist.

7. Fahrradsattel nach einem der Ansprüche 1 bis 86, **dadurch gekennzeichnet, dass** der Elastomerkörper (32) elastisch verformbar ist, so dass eine Relativbewegung zwischen Trägerelement (34) und Sattelschale (22) ermöglicht ist.

8. Fahrradsattel nach einem der Ansprüche 1 bis 7, **dadurch gekennzeichnet, dass** der Elastomerkörper (32) TPU (thermoplastisches Polyurethan) und/oder der E-TPU aufweist bzw. aus TPU oder E-TPU ausgebildet ist und/oder dass der Elastomerkörper (32) EVA (Ethylenvinylacetat) aufweist, bzw. aus EVA ausgebildet ist.

9. Fahrradsattel nach einem der Ansprüche 1 bis 8, **dadurch gekennzeichnet, dass** das Sattelgestell (18) insbesondere ein vorderes Verbindungselement (42) des Sattelgestells (18) mit dem Trägerelement (34) im Bereich einer Sattelspitze (14) verbunden ist und/oder dass das Sattelgestell (18) insbesondere ein hinteres Verbindungselement (44) des Sattelgestells (18) mit dem Trägerelement (34) im Bereich einer Sattelrückseite (46) mit dem Trägerelement (34) verbunden ist.

10. Fahrradsattel nach einem der Ansprüche 1 bis 9, **dadurch gekennzeichnet, dass** das Trägerelement (34) im Sitzbereich (10) angeordnet ist, wobei vorzugsweise die Größe des Trägerelements (34) im Sitzbereich mindestens 70%, insbesondere mindestens 80%, besonders bevorzugt mindestens 90% der Größe der Sattelschale (22) beträgt.

11. Fahrradsattel nach einem der Ansprüche 1 bis 10, **dadurch gekennzeichnet, dass** das Trägerelement (34) im Bereich der Sattelspitze (14) angeordnet ist, wobei vorzugsweise die Größe des Trägerelements (34) im Bereich der Sattelspitze (14) mindestens 70%, insbesondere mindestens 80%, besonders bevorzugt mindestens 90% der Größe der Sattelschale (22) beträgt.

12. Fahrradsattel nach einem der Ansprüche 1 bis 11, **dadurch gekennzeichnet, dass** das Trägerelement (34) in einem Mittelbereich (12) zwischen dem Sitzbereich (10) und dem Bereich der Sattelspitze (14) angeordnet ist, wobei vorzugsweise die Größe des Trägerelements (34) im Mittelbereich (12) mindestens 70%, insbesondere mindestens 80%, besonders bevorzugt mindestens 90% der Größe der Sattelschale (22) beträgt.

13. Fahrradsattel nach einem der Ansprüche 1 bis 11, **dadurch gekennzeichnet, dass** sich das Trägerelement (34) von dem Bereich der Sattelspitze (14) bis zum Bereich der Sattelrückseite (46) erstreckt und vorzugsweise einstückig ausgebildet ist.

14. Fahrradsattel nach einem der Ansprüche 1 bis 13, **dadurch gekennzeichnet, dass** eine Außenkontur des Elastomerkörpers (32) einer Außenkontur des Fahrradsattels entspricht und/oder dass eine Außenkontur der Sattelschale (22) einer Außenkontur des Fahrradsattels entspricht.

15. Fahrradsattel nach einem der Ansprüche 1 bis 14, **dadurch gekennzeichnet, dass** sich die Sattelschale (22) über einen Sitzbereich (10) des Fahrradsattels vollständig erstreckt und/oder dass sich die Sattelschale (22) über einen Bereich der Sattelspitze (14) des Fahrradsattels vollständig erstreckt und/oder dass sich die Sattelschale (22) über einen Mittelbereich (12) des Fahrradsattels vollständig erstreckt.

16. Fahrradsattel nach einem der Ansprüche 1 bis 15, **dadurch gekennzeichnet, dass** der Elastomerkörper (32) flächig mit der Sattelschale (22) verbunden ist und/oder dass der Elastomerkörper mindestens 70%, vorzugsweise mindestens 80%, besonders bevorzugt mindestens 90% einer Unterseite (30) der Sattelschale (22) bedeckt und/oder dass der Elastomerkörper mindestens 70%, vorzugsweise mindestens 80%, besonders bevorzugt mindestens 90% einer Oberseite (36) des Trägerelements (34) bedeckt.

17. Fahrradsattel nach einem der Ansprüche 1 bis 16, **dadurch gekennzeichnet, dass** der Elastomerkörper (32) in Seitenansicht (46) des Fahrradsattels zumindest teilweise sichtbar ist.

18. Fahrradsattel nach einem der Ansprüche 1 bis 17, **dadurch gekennzeichnet, dass** die Sattelschale (22) gegenüber dem Trägerelement (34) bei Belastung um eine sich in Längsrichtung (48) erstreckende Längsachse (49), vorzugsweise um einen Winkel von 2° bis 10°, insbesondere 2° bis 5° schwenkbar ist.

## Claims

1. A bicycle saddle, comprising
a saddle shell (22),
a saddle padding (26) connected to an upper side (24) of the saddle shell (22),
a support element (34) connected to a saddle frame (18) for connection to a seat post, and
an elastomeric body (32) arranged between the support element (34) and the saddle shell (22),
wherein the support element (34) and the saddle shell (22) are made from a plastic material and the elastomeric body (32) is made from a foam material,
wherein the saddle shell (22) has a lower stiffness than the support element (34),
**characterized in that**
the support element (34) and the saddle shell (22) comprise the same base material, wherein the different stiffness is obtained by different fiber contents.

2. The bicycle saddle according to claim 1, **characterized in that** the support element (24) comprises a fiber reinforced plastic material, in particular a glass fiber reinforced and/or carbon fiber reinforce plastic material, wherein it is preferred that the support element (24) comprises fibers to an amount of at least 10 %, in particular at least 20 %, and particularly preferably at least 30 %.

3. The bicycle saddle according to claim 1 or 2, **characterized in that** the elasticity modulus of the support element (34) is at least twice, in particular five times, particularly preferably ten times as high as the elasticity modulus of the saddle shell (22).

4. The bicycle saddle according to any one of claims 1-3, **characterized in that** the elasticity modulus of the support element (34) is at least 3000 MPa, in particular at least 4000 MPa, and particularly preferably at least 6000 MPa, and/or that the elasticity modulus of the saddle shell (22) is lower than 3000 MPa, in particular lower than 2000 MPa, and particularly preferably lower than 1000 MPa.

5. The bicycle saddle according to any one of claims 1-4, **characterized in that** the saddle shell (22) comprises fibers to an amount of less than 30 %, preferably less than 25 %, particularly preferably less that 20%, and in particular does not comprise any fibers at all.

6. The bicycle saddle according to any one of claims 1-5, **characterized in that** the support element (34) and the saddle shell (22) comprise PP, PA6 or PA12.

7. The bicycle saddle according to any one of claims 1 to 6, **characterized in that** the elastomeric body (32) is adapted to be elastically deformed such that a relative movement between the support element (34) and the saddle shell (22) is possible.

8. The bicycle saddle according to any one of claims 1 to 7, **characterized in that** the elastomeric body (32) comprises TPU (thermoplastic polyurethan) and/or E-TPU or is made from TPU or E-TPU, and/or that the elastomeric body (32) comprise EVA (ethylene vinyl acetate) or is made from EVA.

9. The bicycle saddle according to any one of claims 1 to 8, **characterized in that** the saddle frame (18), in particular a front connecting element (42) of the saddle frame (18), is connected to the support element (34) in the area of a saddle tip (14), and/or that the saddle frame (18), in particular a rear connecting element (44) of the saddle frame (18), is connected to the support element (34) in the area of a rear side (46) of the saddle.

10. The bicycle saddle according to any one of claims 1 to 9, **characterized in that** the support element (34) is arranged in the seating area (10), wherein the size of the support element (34) in the seating area preferably amounts to at least 70 %, in particular at least 80 %, particularly preferably at least 90 % of the size of the saddle shell (22).

11. The bicycle saddle according to any one of claims 1 to 10, **characterized in that** the support element (34) is arranged in the area of the saddle tip (14), wherein the size of the support element (34) in the area of the saddle tip (14) preferably amounts to at least 70 %, in particular at least 80 %, particularly preferably at least 90 % of the size of the saddle shell (22).

12. The bicycle saddle according to any one of claims 1 to 11, **characterized in that** the support element (34) is arranged in a central area (12) between the seating area (10) and the area of the saddle tip (14), wherein the size of the support element (34) in the central area (12) preferably amounts to at least 70 %, in particular at least 80 %, particularly preferably at least 90 % of the size of the saddle shell (22).

13. The bicycle saddle according to any one of claims 1 to 11, **characterized in that** the support element (34) extends from the area of the saddle tip (14) to the area of the rear side (46) of the saddle and is preferably integrally formed.

14. The bicycle saddle according to any one of claims 1 to 13, **characterized in that** an outer contour of the elastomeric body (32) corresponds to an outer contour of the bicycle saddle, and/or that an outer contour of the saddle shell (22) corresponds to an outer contour of the bicycle saddle.

15. The bicycle saddle according to any one of claims 1 to 14, **characterized in that** the saddle shell (22) completely extends across a seating area (10) of the bicycle saddle, and/or that the saddle shell (22) completely extends across an area of the saddle tip (14) of the bicycle saddle, and/or that the saddle shell (22) completely extends across a central area (12) of the bicycle saddle.

16. The bicycle saddle according to any one of claims 1 to 15, **characterized in that** the elastomeric body (32) is connected to the saddle shell (22) over the entire surface, and/or that the elastomeric body covers at least 70 %, preferably at least 80 %, particularly preferably at least 90 % of a lower side (30) of the saddle shell (22), and/or that the elastomeric body covers at least 70 %, preferably at least 80 %, particularly preferably at least 90 % of an upper side (36) of the support element (34).

17. The bicycle saddle according to any one of claims 1 to 16, **characterized in that**, as seen in a side view (46) of the bicycle saddle, the elastomeric body (32) is at least partially visible.

18. The bicycle saddle according to any one of claims 1 to 17, **characterized in that** the saddle shell (22), when loaded, is adapted to be pivoted about a longitudinal axis (49) extending in a longitudinal direction (48) preferably at an angle of 2° to 10°, in particular 2° to 5°, relative to the support element (22).

## Revendications

1. Selle de bicyclette dotée
d'une coque de selle (22),
d'un rembourrage de selle (26) relié à une face supérieure (24) de la coque de selle (22),
d'un élément porteur (34), lequel est relié à un rail de selle (18) pour liaison avec un support de selle et
d'un corps élastomère (32) agencé entre l'élément porteur (34) et la coque de selle (22),
dans lequel l'élément porteur (34) et la coque de selle (22) sont fabriqués en plastique et le corps élastomère (32) est fabriqué en matière alvéolaire,
dans lequel la coque de selle (22) comporte une rigidité plus faible que l'élément porteur (34),
**caractérisée en ce que**
l'élément porteur (34) et la coque de selle (22) comportent la même matière de base, dans laquelle la rigidité différente est obtenue par une proportion différente de fibres.

2. Selle de bicyclette selon la revendication 1, **caractérisée en ce que** l'élément porteur (24) comporte du plastique renforcé de fibres, en particulier renforcé de fibres de verre et/ou renforcé de fibres de verre, dans lequel il est préféré que l'élément porteur (24) comporte au moins 10 %, en particulier au moins 20 % et tout particulièrement au moins 30 % de fibres.

3. Selle de bicyclette selon la revendication 1 ou 2, **caractérisée en ce que** le module d'élasticité de l'élément porteur (34) est au moins deux fois, en particulier cinq fois, tout particulièrement dix fois supérieur au module d'élasticité de la coque de selle (22).

4. Selle de bicyclette selon l'une des revendications 1 à 3, **caractérisée en ce que** le module d'élasticité de l'élément porteur (34) vaut au moins 3000 MPa, en particulier au moins 4000 MPa et tout particulièrement au moins 6000 MPa et/ou **en ce que** le module d'élasticité de la coque de selle (22) est inférieure à 3000 MPa, en particulier inférieure à 2000 MPa et tout particulièrement inférieure à 1000 MPa.

5. Selle de bicyclette selon l'une des revendications 1 à 4, **caractérisée en ce que** la coque de selle (22) comporte moins de 30 %, de préférence moins de 25 %, tout particulièrement moins de 20 % de fibres, et en particulier ne comporte pas de fibres.

6. Selle de bicyclette selon l'une des revendications 1 à 5, **caractérisée en ce que** l'élément porteur (34) et la coque de selle (22) comportent du PP, du PA6 ou du PA12.

7. Selle de bicyclette selon l'une des revendications 1 à 6, **caractérisée en ce que** le corps élastomère (32) est élastiquement déformable, de sorte qu'un mouvement relatif entre l'élément porteur (34) et la coque de selle (22) est rendu possible.

8. Selle de bicyclette selon l'une des revendications 1 à 7, **caractérisée en ce que** le corps élastomère (32) comporte du PUT (polyuréthane thermoplastique) ou du PUT-E ou est réalisé en PUT ou en PUT-E et/ou **en ce que** le corps élastomère (32) comporte de l'EVA (éthylène-acétate de vinyle) ou est réalisé en EVA.

9. Selle de bicyclette selon l'une des revendications 1 à 8, **caractérisée en ce que** le rail de selle (18), en particulier un élément de liaison avant (42) du rail de selle (18), est relié à l'élément porteur (34) dans la zone d'un bec de selle (14), et/ou **en ce que** le rail de selle (18), en particulier un élément de liaison arrière (44) du rail de selle (18), est relié à l'élément porteur (34) dans la zone d'une face arrière de selle (46).

10. Selle de bicyclette selon l'une des revendications 1 à 9, **caractérisée en ce que** l'élément porteur (34) est disposé dans la zone d'assise (10), dans laquelle la taille de l'élément porteur (34) dans la zone d'assise vaut de préférence au moins 70 %, en particulier au moins 80 %, tout particulièrement au moins 90 % de la taille de la coque de selle (22).

11. Selle de bicyclette selon l'une des revendications 1 à 10, **caractérisée en ce que** l'élément porteur (34) est disposé dans la zone du bec de selle (14), dans laquelle de préférence la taille de l'élément porteur (34) dans la zone du bec de selle (14) vaut au moins 70 %, en particulier au moins 80 %, tout particulièrement au moins 90 % de la taille de la coque de selle (22).

12. Selle de bicyclette selon l'une des revendications 1 à 11, **caractérisée en ce que** l'élément porteur (34) est disposé dans une zone intermédiaire (12) entre la zone d'assise (10) et la zone du bec de selle (14), dans laquelle de préférence la taille de l'élément porteur (34) dans la zone d'assise vaut au moins 70 %, en particulier au moins 80 %, tout particulièrement au moins 90 % de la taille de la coque de selle (22).

13. Selle de bicyclette selon l'une des revendications 1 à 11, **caractérisée en ce que** l'élément porteur (34) s'étend de la zone du bec de selle (14) jusqu'à la zone de la face arrière de selle (46) et est de préférence réalisé d'une seule pièce.

14. Selle de bicyclette selon l'une des revendications 1 à 13, **caractérisée en ce qu'**un contour externe du corps élastomère (32) correspond à un contour externe de la selle de bicyclette et/ou **en ce qu'**un contour externe de la coque de selle (22) correspond à un contour externe de la selle de bicyclette.

15. Selle de bicyclette selon l'une des revendications 1 à 14, **caractérisée en ce que** la coque de selle (22) s'étend entièrement au-dessus d'une zone d'assise (10) de la selle de bicyclette et/ou **en ce que** la coque de selle (22) s'étend entièrement au-dessus d'une zone du bec de selle (14) de la selle de bicyclette et/ou **en ce que** la coque de selle (22) s'étend entièrement au-dessus d'une zone médiane (12) de la selle de bicyclette.

16. Selle de bicyclette selon l'une des revendications 1 à 15, **caractérisée en ce que** le corps élastomère (32) est relié à plat à la coque de selle (22) et/ou **en ce que** le corps élastomère recouvre au moins 70 %, de préférence au moins 80 %, tout particulièrement au moins 90 % une face inférieure (30) de la coque de selle (22) et/ou **en ce que** le corps élastomère recouvre au moins 70 %, de préférence au moins 80 %, tout particulièrement au moins 90 % une face supérieure (36) de l'élément porteur (34).

17. Selle de bicyclette selon l'une des revendications 1 à 16, **caractérisée en ce que** le corps élastomère (32) est au moins partiellement visible en vue en coupe (46) de la selle de bicyclette.

18. Selle de bicyclette selon l'une des revendications 1 à 17, **caractérisée en ce que** la coque de selle (22) peut en cas de charge pivoter par rapport à l'élément porteur (34) autour d'un axe longitudinal (49) s'étendant dans la direction longitudinale (48), de préférence d'un angle de 2° à 10°, en particulier de 2° à 5°.
